Europäisches Patentamt

European Patent Office

Office européen des brevets

(19)

(11) Veröffentlichungsnummer: **0 233 437**
**B1**

# (12) EUROPÄISCHE PATENTSCHRIFT

(45) Veröffentlichungstag der Patentschrift:
07.02.90

(21) Anmeldenummer: 86730026.1

(22) Anmeldetag: 21.02.86

(51) Int. Cl.⁴: **B32B 15/01, C21D 8/10**

(54) **Aus zwei Schichten bestehendes korrosionsbeständiges Rohr oder dergleichen Behälter.**

(43) Veröffentlichungstag der Anmeldung:
26.08.87 Patentblatt 87/35

(45) Bekanntmachung des Hinweises auf die Patenterteilung:
07.02.90 Patentblatt 90/6

(84) Benannte Vertragsstaaten:
AT DE FR GB IT SE

(56) Entgegenhaltungen:
DE-A- 3 527 663
DE-B- 1 227 760
FR-A- 2 069 985
US-A- 2 764 805

CHEMICAL ABSTRACTS, Band 100, Nr. 12, 19.
März 1984, Seite 236, Zusammenfassung Nr. 89531c,
Columbus, Ohio, US; T. MARUO et al.: "Application of
duplex stainless steels to the hot-roll-bonded clad
steels", & DUPLEX STAINLESS STEELS, CONF.
PROC. 1982 (Pub. 1983), 465-80B. VYS. TEMP.,
[MATER.-VSES. SOVESHCH. FIZ.-KHIM. OSN.
SOZDANIYA ZHAROPROCHN. ME 000

(73) Patentinhaber: MANNESMANN Aktiengesellschaft,
Mannesmannufer 2, D-4000 Düsseldorf 1(DE)

(72) Erfinder: Niederhoff, Kurt, Dr.-Ing., Vogelbeerweg 10,
D-4030 Ratingen(DE)
Erfinder: Hagen, Ingo von, Dr.-Ing., Schumannstrasse 1,
D-4150 Krefeld(DE)

(74) Vertreter: Meissner, Peter E., Dipl.-Ing. et al, Meissner &
Meissner Patentanwälte Herbertstrasse 22,
D-1000 Berlin 33 Grunewald(DE)

ACTORUM AG

## Beschreibung

Die Erfindung betrifft ein aus metallisch verbundenen zwei Schichten bestehendes Rohr oder dergleichen Behälter entsprechend dem Gattungsbegriff des Patentanspruches 1.

Für die Förderung, Fortleitung und Lagerung von Erdgas und Erdöl und außerdem für einige besondere Anwendungsfälle in der chemischen Industrie werden gegen Spannungsrißkorrosion und Lochfraßkorrosion lange Zeit beständige und zugleich mechanisch hochfeste und kaltzähe Werkstoffe benötigt. Die korrosionschemischen Belastungen werden ausgezeichnet ertragen von ferritischen Cr-Mo-Stahllegierungen und austenitischen Cr-Mo-Ni-Stahllegierungen mit mindestens 14 % Chrom und von Cr-Mo-haltigen Nickel-Basislegierungen. Diese Werkstoffe sind nicht nur spezifisch teuer, sondern haben auch den Nachteil nur geringerer Festigkeitseigenschaften, so daß Rohre, wie auch andere Bauteile eine große Wanddicke besitzen müssen, um den hohen Innendrücken zu genügen.

Für ähnliche widerstrebende Anforderungen und aus Kostengründen ist deswegen schon vorgeschlagen worden, plattierte Werkstoffe zu verwenden. Der Grundwerkstoff ist hierbei ein un- oder niedriglegierter Kohlenstoffstahl, der wohlfeil und mechanisch fest ist. In der DE-PS 22 02 278 ist als Plattierwerkstoff ein austenitischer Cr-Ni-Stahl vorgeschlagen. Dieser Zweischichtenwerkstoff ist in der Veröffentlichung allerdings noch durch eine Kohlenstoffsperrschicht ergänzt, was das Zweischichtenwerkstoffmaterial verarbeitungsmässig sehr verteuert. Ein Zweischichtenwerkstoff dieser Art hat darüber hinaus noch weitere technologische Nachteile durch die Verarbeitung und/oder die Wärmebehandlung, die für die eine oder die andere Werkstoffschicht erforderlich ist.

Aufgabe der Erfindung ist die Auswahl eines Trägerwerkstoffes mit großer mechanischer Festigkeit, insbesondere mit großer Zähigkeit, vor allem bei Temperaturen beträchtlich unter 0 Grad Celsius, für einen Zweischichtenwerkstoff, dessen Plattierschicht aus ferritischer oder austenitischer Stahllegierung oder einer Nickelbasislegierung ihre Korrosionsbeständigkeit durch ein Lösungsglühen bei einer Temperatur zwischen 1000 und 1200 Grad Celsius und anschließendem Abschrecken auf unter 350 Grad Celsius erhält.

Diese Aufgabe löst ein Rohr oder dergleichen Behälter aus einem Zweischichtenwerkstoff mit den kennzeichnenden Merkmalen des Hauptanspruchs. Die vorgeschlagene Werkstoffpaarung ist aus mehreren Gründen sehr vorteilhaft. Bei der Beurteilung ist auszugehen von der Herstellung und Behandlung zur Erzeugung höchster Korrosionsbeständigkeit der Plattierwerkstoffschicht. Zum Erreichen der Korrosionsbeständigkeit der Plattierschicht ist er erforderlich, diesen im Anschluß an die Warmformgebung des Zwischen- oder Endproduktes einem Lösungsglühen bei einer Temperatur zwischen 1000 und 1200 Grad Celsius mit anschließendem Abschrecken in Wasser zu unterwerfen. Ausgehend von diesen Bedingungen ist der Trägerwerkstoff gewählt. Es zeigt sich, daß der ausgewählte ferritisch-austenitische Cr-Ni-Duplex-Stahl nach dem Lösungsglühen des Zweischichtenwerkstoffs außer hoher Festigkeit auch eine große Zähigkeit bei tiefen Temperaturen besitzt.

Darüber hinaus bestehen keine solchen Probleme hinsichtlich des Austausches von Legierungselementen wie sie in der DE-PS 22 02 278 den Kohlenstoff betreffend beschrieben sind. Beide Komponenten der Werkstoffpaarung haben einen sehr geringen Kohlenstoffgehalt.

Ein bevorzugter Trägerwerkstoff und Merkmale der Herstellung des erfindungsgemäßen Rohres oder Behälters sind in den Ansprüchen 2 bis 6 erwähnt.

Der klangfeste Verbund des Plattierwerkstoffs mit dem Trägerwerkstoff kann auf verschiedene Arten hergestellt werden. Der Zweischichtenwerkstoff soll danach noch eine Warmumformung erfahren und danach lösungsgeglüht und abgeschreckt werden.

Für die Erzeugung von nahtlosen Rohren wird der Werkstoffverbund durch Ineinanderpressen passender Hohlkörper und durch Strangpressen oder aber durch ein der Warmumformung vorgeschaltetes Plattierungsverfahren hergestellt. Als vorteilhaft wird es angesehen, das entstehende Rohr bei ausreichender Verformungswärme sofort an Wasser auf eine Temperatur von mindestens 350 Grad abzuschrecken. Die Rohre können auf Fertigabmessung kaltgepilgert werden.

Für die Herstellung von nahtgeschweißten Rohren aus Band oder Blech wird von Brammen ausgegangen, die den Trägerwerkstoff bilden und die in üblicher Weise mit einem vorgewalzten geschliffenen dünnen Blech aus dem Plattierwerkstoff sprengplattiert und warmgewalzt werden oder der Zweischichtenwerkstoff wird in einem Kasten aus Trägerwerkstoff und Plattierwerkstoff warmgewalzt. Das Warmwalzen des Zweischichtenwerkstoffs ist problemlos, da die Wärmeausdehnung und der Formänderungswiderstand nur wenig unterschiedlich sind. Deswegen kann eine relativ dünnwandige Plattierung vorgenommen werden, was durch das bevorzugte Sprengplattieren in vorteilhafter Weise zu realisieren ist.

Die weitere Verarbeitung des Bandes oder Bleches zum Rohr kann in zwei alternativen Arbeitsabläufen erfolgen. Entweder wird das erzeugte Blech oder Band unter Nutzung der restlichen Wärme auf die Lösungsglühtemperatur zwischen 1000 und 1200 Grad nachgewärmt und danach auf unter 350 Grad Celsius in Wasser abgeschreckt und nachfolgend zum Rohr verarbeitet. Oder das Band oder Blech wird auf Raumtemperatur abgekühlt, kalt zum Rohr mit Längs- oder Schraubennaht geformt und nahtgeschweißt. Die Nahtschweißung erfolgt in beiden Alternativen, beispielsweise von innen und außen mit zu den Schichtwerkstoffen passenden Schweißzusatzwerkstoffen. In der zweiten Alternative wird das fertige Rohr erstmals oder nochmals auf 1000 bis 1200 Grad zum Lösungsglühen erwärmt und in Wasser auf unter 350 Grad Celsius abgeschreckt und danach an Luft abgekühlt. Die Rohre werden einzeln zum Lösungsglühen als Ganzes in Herstellungslängen in Öfen erwärmt, wobei es vorteilhaft ist, wenn das Rohr dabei um seine Längsachse gedreht wird. Aus der Lösungsglühwärme werden die Rohre zum Beispiel durch Tauchen in Wasser abgeschreckt. Ein Glühen im Zonendurchlaufverfahren mit anschließendem Wasserabschrecken bietet sich ebenfalls an.

Wirtschaftlich ist die Kombination natürlich nicht so vorteilhaft wie die Kombination mit Kohlenstoffstahl, die aber die aufgezeigten und teilweise vorbekannten technischen Nachteile hat. Die wirtschaftlichen Vorteile sind aber sehr bedeutend gegenüber dem Vollmaterial des im höchsten Maße korrosionsbeständigen, ferritischen oder austenitischen Stahles oder einer Nickelbasislegierung, da die demgegenüber wesentlich höheren Festigkeiten des vorgeschlagenen Trägerwerkstoffes es erlauben, die Bauteile mit kleinerer Wanddicke einzusetzen, was nicht nur kleines Gewicht sondern auch leichtere Verarbeitung, preiswerteren Transport und einfachere Installation bewirkt.

Schließlich ist noch darauf hinzuweisen, daß die Werkstoffkomponenten gut schweißbar sind, so daß der Zweischichtenwerkstoff auch für geschweißte Behälter und Rohre verwendbar ist, wie oben schon ausgeführt ist. Ebenso unbedenklich ist die Feldschweißung der Rundnähte auszuführen.

Die Erfindung wird anhand des nachstehend beschriebenen Ausführungsbeispiels für ein längsnahtgeschweißtes Rohr näher erläutert.

Eine Flachbramme von ca. 208 mm Dicke, die einseitig oberflächlich geschliffen ist, mit der Zusammensetzung: 0,028 % C, 043 % Si, 1,69 % Mn, 0,020 % Al, 0,018 % P, 0,002 % S, 21,8 % Cr, 5,42 % Ni, 3,04 % Mo sowie 0,14 % N als Trägerwerkstoffschicht und ein vorgewalztes, ebenfalls einseitig geschliffenes Blech mit ca. 32 mm Wanddicke aus einem hochkorrosionsbeständigen austenitischen Stahl mit der Zusammensetzung: 0,015 % C, 0,31 % Si, 1,48 % Mn, 0,016 % P, 0,003 % S, 0,027 % Al, 1,17 % Cu, 27,15 % Cr, 31,4 % Ni, 3,48 % Mo, sowie 0,11 % N als Plattierwerkstoffschicht werden durch Sprengplattieren metallisch miteinander verbunden. Die so entstandene Einsatzbramme von ca. 240 mm Dicke wird im Ofen auf 1240 Grad C erwärmt und anschließend zum Blech ausgewalzt. Das Fertigwalzen erfolgt bei ca. 1100 Grad C. Die Gesamtblechdicke beträgt 18 mm. Das Blech wird noch aus der Walzhitze mit Wasser auf 320 Grad C abgeschreckt und dann weiter an Luft abgekühlt, so daß es im ausscheidungsfreien Zustand vorliegt.

Das so gefertigte Zweischichten-Blech wird anschließend besäumt, an den Längskanten mit einer X-förmigen Schweißkante versehen und durch Biegeprozesse zum Längsnahtschlitzrohr mit der Plattierschicht innen eingeformt. Danach wird von außen über die gesamte Länge eine Heftnaht gelegt, bei der das MIG-Verfahren mit einem artähnlichen Zusatzwerkstoff (22 % Cr, 9 % Ni, 3 % Mo) angewandt wird. Anschließend wird zunächst von innen eine UP-Naht so geschweißt, daß die Nahtfuge bis ca. 2 mm unterhalb des Randes ist. Hierbei wird ein dem Trägerwerkstoff artähnlicher Zusatzwerkstoff verwendet. Danach wird die Außenseite nach dem gleichen Verfahren unter Verwendung gleicher Zusatzwerkstoffe in einer Lage fertiggeschweißt. Zum Schluß wird von der Innenseite die Plattierungslage UP-geschweißt. Hierbei kommt als Zusatzwerkstoff Inconel 625 zur Anwendung. Nach dem Schweißen wird das Rohr expandiert, sandgestrahlt und an den Enden mit einer Schweißfase versehen.

Das Zweichichtenrohr weist die in der Tafel aufgeführten Eigenschaften auf.

**Tafel**

| Mechanisch-technologische Eigenschaften des Trägerwerkstoffs | |
| --- | --- |
| Streckgrenze | $= R_{0,2} = 660$ N/mm |
| Zugfestigkeit | $= R_m = 772$ N/mm$^2$ |
| Bruchdehnung | $= A_5 = 36\%$ |
| Brucheinschnürung | $= Z = 71\%$ |
| ISO-V-Kerbschlagarbeit | $= A_v -20$ Grad C $= 151$ J |
| | $A_v -40$ Grad C $= 126$ J |
| | $T_ü A_v max/2 = 87$ Grad C |
| | $T_ü$ DWTT $= 72$ Grad C |
| (DWTT = Drop Weight Tear Test) | |

Spannungsrißkorrosionsuntersuchung im Autoklaven mit
modifizierter Zugprobe

| Testbedingungen | Ergebnis |
|---|---|
| 5 M (292 g/l) NaCl<br>10 bar $H_2S$<br>20 bar $CO_2$ bei RT<br>20–250 Grad C Prüftemp.<br>50–120% Streckgrenzenauslastung;<br>28 Tage Testdauer | Plattierungswerkstoff und Plattierungsschweißnaht frei von interkristalliner Korrosion, Lochfraß und Spannungsrißkorrosion. |

**Patentansprüche**

1. Rohr oder dergleichen Behälter bestehend aus einer äußeren relativ dicken Trägerwerkstoffschicht und einer inneren relativ dünnen, im höchsten Maße korrosionsbeständigen Plattierwerkstoffschicht aus ferritischem oder austenitischem Stahl oder einer Nickelbasislegierung, wobei die Plattierwerkstoffschicht mit der Trägerwerkstoffschicht metallisch verbunden ist,
**dadurch gekennzeichnet,**
daß die Trägerwerkstoffschicht aus einem an sich bekannten kohlenstoffarmen Cr-Ni-Duplex-Stahl, ggf. mit Molybdän besteht, dessen Analyse so abgestimmt ist, daß die Gefügebestandteile Ferrit und Austenit im Bereich von 4:1 bis 1:4 liegen und daneben allenfalls noch eine kleine Menge Martensit vorhanden ist und die verbundenen Werkstoffe nach der letzten Warmformgebung des Zwischen- oder Endproduktes aus einem Lösungsglühtemperaturbereich von 1000 bis 1200 Grad Celsius in Wasser auf eine Temperatur unter 350 Grad Celsius abgeschreckt und anschließend an ruhender Luft abgekühlt sind.

2. Rohr oder dergleichen Behälter nach Anspruch 1,
**dadurch gekennzeichnet,**
daß die Trägerwerkstoffschicht aus einer Stahllegierung mit 0,005 bis 0,06 % C, 0,1 bis 1,5 % Si, 0,2 bis 2,5 % Mn, 0,01 bis 0,25 % N, 0,01 bis 6 % Mo, 14 bis 28 % Cr, 3 bis 14 % Ni, Rest Eisen und übliche Verunreinigungen besteht.

3. Rohr oder dergleichen Behälter nach den Ansprüchen 1 und 2,
**dadurch gekennzeichnet,**
daß die verbundenen Werkstoffe nach dem Abkühlen an ruhender Luft einer Kaltverformung von 20 bis 70 % unterzogen sind.

4. Verfahren zum Herstellen eines Rohres nach einem der vorstehenden Ansprühe,
**dadurch gekennzeichnet,**
daß ein dickwandiger innen plattierter Hohlkörper durch Strangpressen zum Rohr umgeformt wird und aus der Strangpreßwärme auf eine Temperatur unter 350 Grad an Wasser abgeschreckt und danach an ruhender Luft abgekühlt wird und ggf. um 20 bis 70 % kaltverformt wird.

5. Verfahren zum Herstellen eines Rohres nach einem der Ansprüche 1 bis 2,
**dadurch gekennzeichnet,**
daß ein Band oder Blech, das aus Trägerwerkstoff und klangfest verbundenem Plattierwerkstoff besteht, durch Warmwalzen hergestellt, aus der Warmwalzwärme auf die Lösungsglühtemperatur zwischen 1000 und 1200 Grad nachgewärmt, in Wasser auf eine Temperatur unter 350 Grad abgeschreckt und darunter an ruhender Luft abgekühlt wird und kalt in Rohrform gebogen und von innen und außen nahtgeschweißt wird.

6. Verfahren zum Herstellen eines Rohres nach einem der Ansprüche 1 oder 2,
**dadurch gekennzeichnet,**
daß ein Band oder Blech, das aus Trägerwerkstoff und klangfest verbundenem Plattierwerkstoff besteht, durch Warmwalzen hergestellt, kalt in Rohrform gebogen, von innen und außen nahtgeschweißt und auf die Lösungsglühtemperatur zwischen 1000 und 1200 Grad Celsius erwärmt, auf eine Temperatur unter 350 Grad an Wasser abgeschreckt und darunter an ruhender Luft abgekühlt wird.

**Claims**

1. Pipe or similar container consisting of a relatively thick external base material layer and a relatively thin internal plating material layer of ferritic or austenitic steel or a nickel-base alloy which is corrosion-resistant to as high a degree as possible, the plating material layer being metallically joined to the base material layer, characterised in that the base material layer consists of a known low-carbon Cr-Ni-duplex steel, optionally with molybdenum, the analysis of which is proportioned so that the structure constituents ferrite and austenite are in a range of 4:1 to 1:4 and in addition if need be there is still a small amount of martensite present and the joined materials are quenched from a solution treatment temperature range of 1000 to 1200 degrees Celsius to a temperature of below 350 degrees Celsius in water after the final hot shaping of the intermediate or end product and are then cooled in still air.

2. Pipe or similar container according to Claim 1, characterised in that the base material layer consists of a steel alloy having 0.005 to 0.06% C, 0.1 to 1.5% Si, 0.2 to 2.5% Mn, 0.01 to 0.25% N, 0.01 to 6% Mo, 14 to 28% Cr, 3 to 14% Ni and remainder iron and usual impurities.

3. Pipe or similar container according to Claims 1 and 2, characterised in that the joined materials are subjected to cold shaping of 20 to 70% after cooling in still air.

4. Process for producing a pipe according to one of the preceding Claims, characterised in that a thick-walled, internally plated hollow body is reshaped into a pipe by extrusion and is quenched from the extrusion heat to a temperature of below 350 degrees in water and thereafter is cooled in still air and is optionally cold worked by 20 to 70%.

5. Process for producing a pipe according to one of Claims 1 to 2, characterised in that a strip or sheet which consists of base material and Uniformly bonded plating material is produced by hot-rolling, is subsequently heated from the hot-rolling heat to the solution treatment temperature of between 1000 and 1200 degrees, is quenched to a temperature of below 350 degrees in water and is cooled thereunder in still air and is bent into a pipe shape in the cold state and is seam-welded from the inside and outside.

6. Process for producing a pipe according to one of Claims 1 or 2, characterised in that a strip or sheet which consists of base material and uniformly bonded plating material is produced by hot-rolling, bent into a pipe shape in the cold state, seam-welded from the inside and outside and is heated to the solution treatments temperature of between 1000 and 1200 degrees Celsius, is quenched to a temperature of below 350 degrees in water and is cooled thereunder in still air.

**Revendications**

1. Tube ou récipient analogue constitué d'une couche de matière de support externe relativement épaisse et d'une couche de matière de plaquage interne relativement mince, résistant à la corrosion au plus haut degré, en acier ferritique ou austénitique ou en alliage à base de nickel, la couche de matière de plaquage étant reliée métalliquement à la couche de matière de support, caractérisé en ce que la couche de matière de support est constituée d'un acier duplex chrome-nickel pauvre en carbone, connu en soi, le cas échéant avec du molybdène, dont l'analyse est telle que les constituants ferrite et austénite se trouvent dans la plage de 4:1 à 1:4 et que, en outre, tout au plus une petite quantité de martensite est encore existante, et en ce que les matières liées après le dernier façonnage à chaud du produit intermédiaire ou final sont trempées, depuis une zone de température de recuit de mise en solution de 1000 à 1200°C, dans l'eau à une température au-dessous de 350°C, puis refroidies à l'air au repos.

2. Tube ou récipient analogue selon la revendication, caractérisé en ce que la couche de matière de support est constituée d'un alliage d'acier ayant 0, 005 à 0,06% C, 0,1 à 1,5% Si, 0,2 à 2,5% Mn, 0,01 à 0,25 N, 0,01 à 6% Mo, 14 à 28% Cr, 3 à 14% Ni, le restant étant du fer et les impuretés habituelles.

3. Tube ou récipient analogue selon les revendications 1 et 2, caractérisé en ce que les matières liées après le refroidissement à l'air au repos sont soumises à une déformation à froid de 20 à 70%.

4. Procédé pour réaliser un tube selon une des revendications précédentes, caractérisé en ce qu'un corps creux à paroi épaisse plaqué intérieurement est conformé en tube par extrusion et trempé dans l'eau depuis la température d'extrusion à une température au-dessous de 350°C, puis refroidi à l'air au repos et, le cas échéant, déformé à froid de 20 à 70%.

5. Procédé pour réaliser un tube selon une des revendications 1 ou 2, caractérisé en ce qu'une bande ou tôle, qui est constituée d'une matière de support et d'une matière de plaquage reliée de façon résistante aux vibrations, est réalisée par laminage à chaud, réchauffée de la température de laminage à chaud à la température de recuit de mise en solution entre 1000 et 1200°C, trempée dans l'eau à une température au-dessous de 350°C et encore refroidie à l'air au repos et cintrée à froid en forme de tube et soudée de façon continue de l'intérieur et de l'extérieur.

6. Procédé pour réaliser un tube selon une des revendications 1 ou 2, caractérisé en ce qu'une bande ou tôle, qui est constituée d'une matière de support et d'une matière de plaquage reliée de façon résistante aux vibrations, est réalisée par laminage à chaud, cintrée à froid en forme de tube, soudée de façon continue de l'intérieur et de l'extérieur et réchauffée à la température de recuit de mise en solution entre 1000 et 1200°C, trempée dans l'eau à une température au-dessous de 350°C et encore refroidie à l'air au repos.